# EUROPEAN PATENT SPECIFICATION

(11) **EP 2 194 628 B1**
(45) Date of publication and mention of the grant of the patent: **24.01.2018**
(21) Application number: 08380329.6
(22) Date of filing: 02.12.2008
(51) Int. Cl.: H02H 3/32, H02H 3/16, H02J 3/38

(54) **Fault protection system for a network area of a high voltage distribution network**
Fehlerschutzsystem für einen Netzwerkbereich eines Hochspannungsverteilernetzwerks
Système de protection contre les défauts pour une zone de réseau d'un réseau de distribution haute tension

(43) Date of publication of application: 09.06.2010
(73) Proprietor: ORMAZABAL PROTECTION & AUTOMATION, S.L.U., 48140 Igorre (Vizcaya) (ES)
(72) Inventor: Sanchez Ruiz, Juan Antonio, 48140 Igorre (Vizcaya) (ES); Urraca Romero, Iratxe, 48140 Igorre (Vizcaya) (ES)
(74) Representative: Carpintero Lopez, Francisco

(56) References cited:
- EP-A- 0 015 558
- JP-A- 63 274 331
- JP-A- 2002 199 578
- US-A- 3 906 477

## Description

### Object of the Invention

The invention relates to a fault protection system for a network area of a high voltage distribution network, in which electric power generation equipment can be installed, such as for example a generating set, a microturbine, a fuel cell, etc., to feed the low voltage distribution network in the event that the network area is insulated from the high voltage distribution network (due to maintenance operations, network revamping or incidents in the installations).

### Background of the Invention

The electric power distribution network is a subsystem of the electric power system the function of which is to supply power from the distribution substation at high voltage to the final users at low voltage. This distribution network covers the surface of large consumption centres (general population, large industry, etc.), joining the transformer distribution stations with the electrical transformation centres, which are the last stage of the high voltage supply, since the voltage at the outlet of these centres is low.

The normal diagrams which can be in the distribution network are those called antenna or radial and ring or loop diagrams. In the first, one or more lines come out of the distribution substation, each of these being able to branch out, but such that they never meet again. This type of diagram is very normal in rural areas or areas of overhead distribution. In ring or loop distribution, starting from a head-end of a substation, the line covers the different electrical transformation centres. Thus, the line enters and exits each of them until arriving at one or several head-ends of this same or another substation, i.e., it begins and ends in the set of busbars of the substation. When there is a failure, a protection device located at the start of each network detects it and opens the switch feeding this distribution network.

All electrical distribution networks must have the final object of ensuring the quality and continuity of service to its users, preventing power outages and solving these outages as soon as possible in the event that they occur.

In abnormal operating situations of the distribution network, such as situations due to maintenance operations, network revamping or incidents in the installations, among others, electric power generation equipment (such as for example generating sets, microturbines, fuel cells, etc.) is usually used for supplying power to the users affected by these incidents. This generation equipment is connected to the low voltage switchboard of an electrical transformation centre, thus feeding customers connected to said low voltage switchboard, being withdrawn once the distribution network has been restored.

As has been mentioned in the previous paragraph, one of the solutions for supplying customers at low voltage in these situations consists of installing generation equipment for each electrical transformation centre affected by the distribution network failure, thus assuring power for all the customers. This solution involves the drawback of a high cost for the electric companies, since according to the dimensions of the low voltage network and the number of generation equipment to rent the cost can be very high. It also involves the drawback of suffering delays in re-energising the low voltage networks due to the logistics necessary for installing the generation equipment in each of the transformation centres.

On the other hand, the possibility of feeding the separated high voltage distribution network area has also been contemplated, i.e., the network area which is insulated from the rest of the high voltage network due to maintenance operations, network revamping, incidents in the installations, etc., by means of installing a single piece of electric power generation equipment in one of the transformation centres of said network area. In this sense, the generation of electric power would be carried out at low voltage, since said electric power generation equipment would be installed on the low voltage side of the transformation centre, using the transformer of the mentioned centre to convert the low voltage power into high voltage power, and thus be able to distribute this transformed electric power through the separated high voltage distribution network and to feed the rest of the affected transformation centres, i.e., the transformation centres of the network area which has been insulated.

The electrical transformation centres thus energised make up a separated high voltage electrical network, i.e., ground-insulated neutral point, regardless of the type of normal operation which has been defined for the area by the electric company. Thus, the area of the network thus energised is insulated from the substation of origin and therefore, the head-end protections located at the beginning of the network lose their operative ability. In this sense, the lines will lack the protection of a system sensitive to the electrical effects caused by the ground fault currents, located in the substation where the line head-end is, and which causes the opening of the cut-off apparatus in the event of detecting a homopolar voltage.

In said insulated network area, a ground fault can remain permanently without being detected and the system is transformed in that case into a system operating with a phase to ground. The point where the fault occurs drains low value ground current, these are currents of the order of a few to several hundred milliamperes depending on the capacity, which return through the ground to the circuit through the parasitic capacities of the lines. These values are enough to put people's lives in danger. It has to be taken into account that 10 metres of cable can generate an intensity of the order of 30 mA with the consequent lack of safety. However, overvoltage affecting healthy phases is considerable and causes an additional stress on the insulation of transformers, engines and cables. Power cables are generally selected for this type of network such that they can operate continuously in this situation. However, the engines and transformers subjected to this situation for long periods can age prematurely, especially engines.

A possible solution with respect to the electrical effects caused by the ground fault currents which can arise in the separated high voltage distribution network is the use of a measurement cell in the transformation centre where the electric power generation equipment is installed. Thus, the measurement cell installed in the high voltage side of the transformation centre and which houses a single-phase voltage measurement transformer per each phase, the cell being communicated with the busbar of the general set of cells by means of high voltage cables, allows carrying out at all times the measurement of the line-to-neutral voltage between each of the phases and ground. From these line-to-neutral voltages, an electronic relay installed in a cell for protecting the transformation centre carries out the calculation of the homopolar voltage, and in the event of being greater than the value specified in the setting of the relay, it acts on the switching, causing the opening of the circuit. An example of such a system is disclosed in JP 2002 199 578. This last solution with respect to the electrical effects caused by ground fault currents comprises the advantage that the measurement cell used is standard, the measurement transformers being installed, set and checked during their manufacture, such that the on site assembly and connection tasks are eliminated, eliminating transformer installation errors and reducing the installation labor cost and time. Thus, once the cables of the distribution network are connected, the measurement cell is operative. However, on the other hand, this solution also comprises certain drawbacks, such as for example the problems related with the transport of the measurement cells and the handling thereof when being assembled in the centre due to their large dimensions and weight. Furthermore, due to their considerable dimensions they can comprise space problems in transformation centres, since there is currently a greater tendency towards more and more compact transformation centres, and on occasions it may happen that there is not enough space for the installation of a measurement cell. It must be taken into account that the transformation centres are not prepared to install protection relays or voltage transformers neither at the physical nor at the functional level. The dimensions of a measurement cell together with the electronic equipment have a volume close to that of many transformation centres. On the other hand, the use of voltage measurement transformers involves the risk of being the cause of explosions due to ferroresonance problems, which give rise to the destruction of the switchgear and its connections.

Portable equipment, with constant connections and disconnections in the installations, has to have robustness against connection errors and not generate explosions or fires in the event of mishandling. The use of generation equipment is transitory and its frequency of connection and disconnection can be hour intervals.

On other occasions, voltage transformers are installed at the base of the cells and are assembled on site. They are plug-in shielded transformers. Given their volume, they are not installed one per each phase because the base of the switchgear lacks space for it. Upon being installed, set and checked on site, installation errors of the transformers can occur. These transformers can be furthermore cause explosions giving rise to the destruction of the switchgear and its connections due to ferroresonance problems.

Another one of the solutions adopted with respect to the abnormal operating situations of the distribution network involves feeding the separated distribution network through small mobile substations, such as those transported by means of lorries for example. The biggest drawback that this type of solution involves is that the installation area of said substation must always be an easy-access area, which in the case of rural or mountainous areas is not probable, thus making the accessibility of the transport means of said "small" substations difficult or impossible.

Another possible solution is to install grounding reactors similar to those of the substation. The drawback is that it is not a portable system and requires a grounding network that assures step and touch voltages depending on the faults.

### Description of the Invention

The present invention relates to a fault protection system for a network area of a high voltage distribution network, the network area comprising:
- a first high voltage/low voltage electrical transformation centre, connected to at least one phase of a high voltage line of said area and configured to feed a first low voltage distribution network,
- at least one second high voltage/low voltage electrical transformation centre, connected to at least one phase of the mentioned high voltage line of said area and configured to feed a second low voltage distribution network and
- electric power generation equipment configured to feed, when the network area is insulated from the rest of the high voltage network, the first low voltage distribution network. The electric power generation equipment can be for example a generating set, a microturbine, a fuel cell, etc.

The fault protection system is applicable in abnormal operating situations of the high voltage distribution network, such as situations due to maintenance operations, network revamping or incidents in the installations, in which a network area, i.e., a part of the high voltage distribution network is insulated (separated) from the rest of the high voltage network.

According to the present, the electric power generation equipment is connected to low voltage side of the mentioned first centre to feed the separated high voltage network through at least one transformer of the mentioned first centre. This electric power generation equipment can also feed the first low voltage distribution network when the network area is insulated from the rest of the high voltage network.

The fault protection system of the invention is installed between a high voltage side of the first centre and low voltage side of said centre, in a position preceding the electric power generation equipment (for example between the connection of the electric power generation equipment and the low voltage side of the first centre), the fault protection system being configured to detect a ground fault and to issue an order for the electric power generation equipment to stop operating.

The incorporation of a fault protection system according to the present invention allows using the electric power generation equipment not only to feed the low voltage customers (the first low voltage distribution network) as is currently done, but furthermore allows energising a certain area of the actual high voltage distribution network (separated high voltage network area) and in short, feeds the rest of the affected transformation centres which are in said network area (insulated), assuring the safety both of equipment items and of people during these abnormal operating situations.

The fault protection system can comprise at least one detection device configured for detecting the line-to-neutral voltage (voltage between phase and ground) of at least one phase of the high voltage line of the network area (insulated). The fault protection system can be connected to a grounding network for protecting the first electrical transformation centre, i.e., it uses the actual grounding network of the low voltage side of the transformation centre as ground reference, without the need to carry out a new grounding network specifically for said fault protection system. The detection of the line-to-neutral voltage can be carried out either through a detection device comprising a resistive voltage tap or through a detection device comprising a capacitive voltage tap, the detection device being able to be in both cases installed both inside the transformation centre and outdoors.

The fault protection system of the invention can comprise at least one control / protection device configured to obtain a homopolar voltage value from the line-to-neutral voltage detected by the detection device. The control / protection device can comprise a normally closed contact configured to issue an order for the electric power generation equipment to stop when the homopolar voltage value is greater than an established value indicative of the presence of a ground fault.

The fault detection and control / protection system is completed with interconnection means between the detection device and the control / protection device. Both in the case of using a resistive voltage tap and in the case of a capacitive voltage tap, the interconnection means can comprise a wiring kit allowing the connection of the control / protection device with the detection device.

By means of using the fault protection system of the invention, the network area thus energised is protected against ground faults which can occur in said network area, said fault protection system causing the electric power generation equipment to stop when it detects a homopolar voltage greater than the value specified in its setting. Thus, by means of a single electric power generation equipment the entire area of the high voltage distribution network which is insulated can be fed, as well as all the users at low voltage depending on said area, considerably reducing the costs for electric companies, minimising re-energisation times of the affected network area and allowing selecting the connection point to the high voltage network, minimising the inconveniences which the use of auxiliary electric power generation equipment imply.

Furthermore, the fault protection system of the invention can be made up as a lightweight, manageable, rapidly installable, temporary and portable device without need for a grounding network and protected against erroneous handling, with the advantages mentioned above, preventing the use of heavy and considerably large measurement cells, which require a large space within transformation centres and the use of lorries and cranes for their transport and assembly.

The resistive voltage tap can comprise a precision resistor and metal inserts embedded in an insulator made of polymeric material (for example epoxy resin, silicone, etc.), the inserts being configured to act as electrodes between an active high-voltage point, for example the mentioned at least one phase of the high voltage line, and the grounding network.

The resistive voltage tap can be installed in the terminals of the high voltage power cables, either the terminals of the power cables of the high voltage cells or the terminals of the high voltage power cables of the transformer.

The capacitive voltage tap can comprise standardizing shields for standardizing the electric field integrated in bushings to which the high voltage power cables, either of the transformer or of the high voltage distribution cells, are connected. Therefore, in this case the detection device is integrated in the actual bushings either of the transformer or of the cell.

The capacitive voltage tap can be installed in the terminals of the high voltage power cables, either the terminals of the power cables of the high voltage cells or the terminals of the high voltage power cables of the transformer.

The protection system of the invention can comprise interconnection means between the detection device and the control / protection device.

The interconnection means can comprise a wiring kit configured to allow the connection of the control / protection device to a capacitive signal obtained from the bushings or from the terminals of the high voltage power cables.

The interconnection means can comprise a wiring kit allowing the connection of the control / protection device to a resistive signal obtained from the insulator or from the terminals of the high voltage power cables.

The protection system of the invention can comprise interconnection means between the detection device and the mentioned at least one phase of the high voltage line.

The interconnection means can comprise a direct threaded connection or an articulated connection.

The interconnection means can comprise an overhead connection.

In the event of having inside the transformation centre a connection without high voltage insulation (conductor, rod or flatbar, either of the high voltage side of the transformer or of the line) a direct threaded connection or an articulated connection will be used depending on the accessible area. In contrast, if the connections inside the transformation centre are totally shielded the detection device can be installed outdoors, placing it on the actual overhead line by means of an overhead connection.

The main features of the protection system of the invention are the following:
- Reduced volume: The lower power of these devices allows drastically reducing their volume, compared with a voltage measurement transformer. Thus the device of the invention is a lightweight portable device that is easily transported, for example in a small case, and is rapidly and temporarily installed when it is necessary.
- Wide range: When there are power increments in the installation, it is not necessary to change the devices for others with a higher ratio.
- Greater reliability: The integral insulation of the entire installation provides greater degrees of protection against external agents. Furthermore, inductive voltage measurement transformers, always susceptible to ferroresonance problems, are not used.
- Short-circuitable: The constant handling of the equipment and its interconnections are protected such that the equipment is totally operative after correcting the erroneous connections, preventing for example problems such as those which can arise in the use of voltage transformers, such as explosions.

### Description of the Drawings

To complement the description being made and for the purpose of aiding to better understand the features of the invention according to a preferred practical embodiment thereof, a set of drawings is attached as an integral part of this description in which the following has been depicted with an illustrative and nonlimiting character:
Figure 1 shows a diagram of a distribution network area (15) insulated with respect to the rest of the high voltage distribution network and, specifically, of a distribution substation (16). The network area (15) comprises several transformation centres (3, 20) and electric power generation equipment (2) installed in a first transformation centre (3).
Figure 2 shows a capacitive voltage tap (7) integrated in a bushing (13).
Figure 3 shows a capacitive voltage tap (7) integrated in a terminal (18) of the high voltage power cables.
Figure 4 shows a resistive voltage tap (6) through an insulator (19) comprising embedded therein a precision resistor (14).
Figure 5 shows a resistive voltage tap (6) integrated in a terminal (18) of the high voltage power cables.
Figure 6 shows an interconnection means (10) between the detection device (5) and at least one phase (11), said means comprising (10) a direct threaded connection.
Figure 7 shows an interconnection means (10) between the detection device (5) and at least one phase (11), said means comprising (10) an articulated connection.
Figure 8 shows an interconnection means (10) between the detection device (5) and at least one phase (11), said means comprising (10) an overhead connection.

### Preferred Embodiment of the Invention

The fault protection system (1) object of the present invention is a system applicable in abnormal operating situations of the electric power distribution network, such as situations due to maintenance operations, network revamping or incidents in the installations.

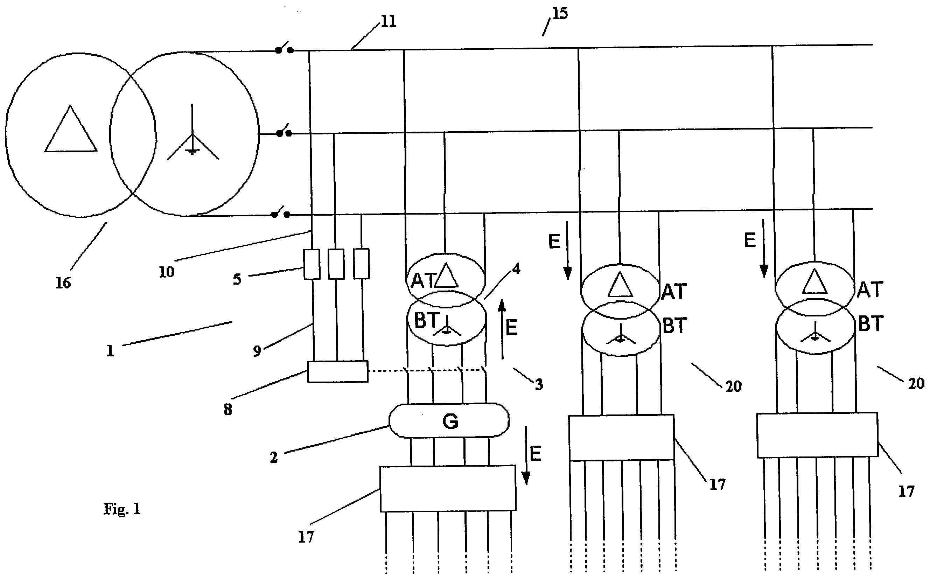

In these cases, as shown in Figure 1, a network area (15) of the high voltage distribution network is insulated from the rest of the network, making up a network area (15) with a ground-insulated neutral point, and therefore, without any protection against the electrical effects caused by ground fault currents. In this sense, electric power generation equipment (2), such as for example a generating set, a microturbine, a fuel cell, etc., is installed in the low voltage side of a first electrical transformation centre (3), this centre (3) being located in the network area (15) which is insulated from the rest of the high voltage network. Therefore, said generation equipment (2) feeds a first low voltage distribution network corresponding to the mentioned first transformation centre (3), as well as the separated network area (15) through at least one transformer (4) housed in said first transformation centre (3), and in short, feeds at least one second affected transformation centre (20) which is in said network area (15). This simultaneous feeding of the low voltage network and of the network area (15) is possible due to the incorporation of the fault protection system (1) object of the invention, since said fault protection system (1) provides the necessary protection for the network area (15) against the electrical effects caused by ground fault currents, assuring the safety of both equipment items and of people during these abnormal operating situations.

The fault protection system (1) is installed between a high voltage side of the first centre (3) and a low voltage side of said centre (3), in a position preceding the electric power generation equipment (2), i.e., between the connection of the electric power generator (2) and the low voltage side of the transformer (4) of the mentioned first centre (3).

As shown in Figure 1, the fault protection system (1), which is a portable system, is configured to detect a ground fault and to issue an order for the electric power generation equipment (2) to stop operating. Specifically, the fault protection system (1) comprises at least one detection device (5) allowing the detection of the line-to-neutral voltage (phase to ground voltage) of at least one phase (11) of the high voltage line of the network area (15), using the actual grounding network of the low voltage side of the first transformation centre (3) as ground reference.

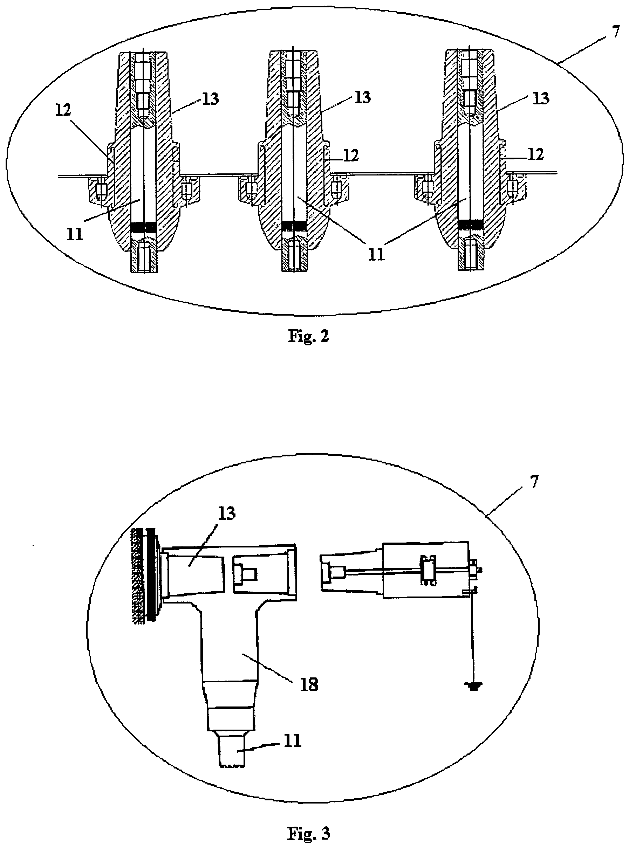

As can be seen in Figures 2-5, the detection of the line-to-neutral voltage can be carried out either through a resistive voltage tap (6) or through a capacitive voltage tap (7), the detection device (5) in both cases being able to be installed both inside the transformation centre (3) and outdoors.

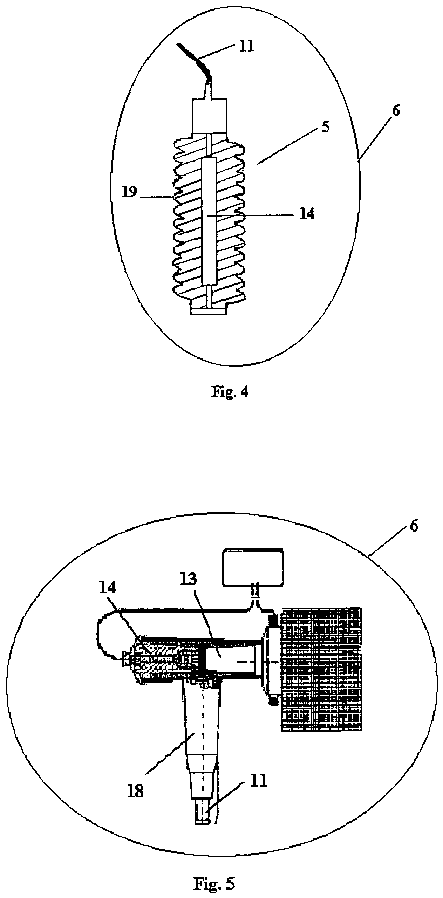

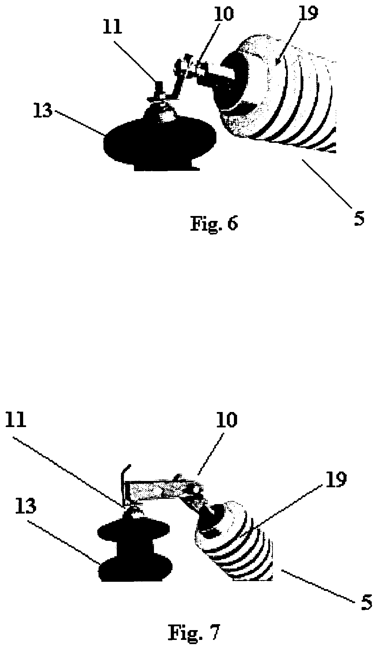

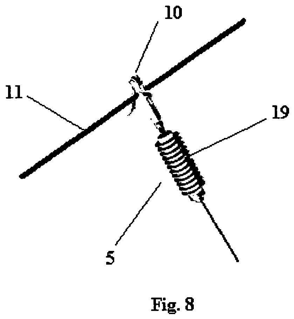

As seen in Figure 4, the resistive voltage tap (6) comprises a precision resistor (14) together with metal inserts embedded in an insulator (19) made of polymeric material, such as for example epoxy resin, silicone, etc., said inserts corresponding with the electrodes between the high voltage active point and the ground of the installation. In this case, for the connection of the detection device (5) with at least one phase (11) of the high voltage line of the network area (15), the fault protection system (1) comprises interconnection means (10) which, depending on the location of the detection device (5), can consist of a direct threaded connection (see Figure 6), an articulated connection (see Figure 7) or an overhead connection (see Figure 8).

As illustrated in Figure 5, there is the possibility that the resistive voltage tap (6) is installed in the terminals (18) of the power cables of the mentioned phases (11) of the high voltage line, either the terminals of the power cables of the high voltage cells or the terminals of the high voltage power cables of the transformer (4).

In the event of using a capacitive voltage tap (7), as shown in Figure 2, said capacitive voltage tap (7) comprises standardizing shields (12) for standardizing the electric field integrated in at least one bushing (13) in which the high voltage power cable, either of the transformer (4) or of the high voltage distribution cells, is connected. Therefore, in this case the detection device (5) is integrated in the actual bushings (13), either of the transformer (4) or of the cell.

Figure 3 shows another possible solution of the capacitive voltage tap (7), in which the capacitive voltage tap (7) is installed in the terminals (18) of the high voltage power cables, either the terminals (18) of the power cables of the high voltage cells or the terminals (18) of the high voltage power cables of the transformer (4).

As seen in Figure 1, the fault protection system (1) further comprises at least one control / protection device (8) which obtains and controls the homopolar voltage value from the line-to-neutral voltages detected by the detection device (5). In the event of obtaining a homopolar voltage greater than the value specified in its setting, this control / protection device (8) will order the electric power generation equipment (2) to halt through the opening of a normally closed contact.

Also, in said Figure 1 it can be seen how the fault protection system (1) comprises interconnection means (9) between the detection device (5) and the control / protection device (8). Both in the case of using a resistive voltage tap (6) and in the case of a capacitive voltage tap (7), the interconnection means (9) consist of a wiring kit allowing the connection of both devices (5) and (8).

The reference numbers used in this text represent the following elements:
1.- Fault protection system
2.- Electric power generation equipment
3.- First high voltage/low voltage electrical transformation centre
4.- Transformer of the first centre (3)
5.- Detection device
6.- Resistive voltage tap
7.- Capacitive voltage tap
8.- Control / protection device
9.- Interconnection means between (5) and (8)
10.- Interconnection means between (5) and at least one phase (11) of the high voltage line of the network area (15)
11.- Phase of the high voltage line of the network area (15)
12.- Standardizing shields for standardizing the electric field
13.- Bushing
14.- Precision resistor
15.- Separated high voltage network area
16.- Distribution substation
17.- Low voltage switchboard
18.- Terminal
19.- Insulator
20.- Second transformation centre

In this text, the word "comprise" and its variants (such as "comprising", etc.) must not be interpreted exclusively, i.e., they do not exclude the possibility that what is described includes other elements, steps, etc.

In addition, the invention is not limited to the specific embodiments which have been described but rather it also encompasses, for example, the embodiments which can be carried out by a person skilled in the art (for example, with regard to the choice of materials, dimensions, components, configuration, etc.), within what is inferred from the claims.

## Claims

1. Fault protection system (1) for a network area (15) of a high voltage distribution network, the network area (15) comprising
- a first high voltage/low voltage electrical transformation centre (3), connected to at least one phase (11) of a high voltage line of said network area (15) and configured to feed a first low voltage distribution network,
- at least one second high voltage/low voltage electrical transformation centre (20), connected to at least one phase (11) of the mentioned high voltage line of said network area (15) and configured to feed a second low voltage distribution network and
- electric power generation equipment (2) configured to feed, when the network area (15) is insulated from the rest of the high voltage network, the first low voltage distribution network wherein the electric power generation equipment (2) is connected to a low voltage side of the mentioned first centre (3) to feed the high voltage network area (15) through at least one transformer (4) of the mentioned first centre (3), and **characterized in that** the fault protection system (1) is a portable fault protection system (1) installed between a high voltage side of the first centre (3) and a low voltage side of said centre (3) when the network area (15) is insulated from the rest of the high voltage network, in a position preceding the electric power generation equipment (2), the fault protection system (1) being configured to detect a ground fault and to issue an order for the electric power generation equipment (2) to stop operating.

2. Protection system according to claim 1, wherein the protection system (1) is connected to a grounding network for protecting the first electrical transformation centre (3).

3. Protection system according to claim 2, comprising at least one detection device (5) configured to detect the line-to-neutral voltage of at least one phase (11) of the high voltage line of the network area (15).

4. Protection system according to claim 3, wherein the detection device (5) comprises a resistive voltage tap (6).

5. Protection system according to claim 4, wherein the resistive voltage tap (6) comprises a precision resistor (14) and metal inserts embedded in an insulator (19) made of polymeric material, the inserts being configured to act as electrodes between an active high-voltage point and the grounding network.

6. Protection system according to claim 4, wherein the resistive voltage tap (6) is installed in terminals (18) of the high voltage power cables.

7. Protection system according to claim 3, wherein the detection device (5) comprises a capacitive voltage tap (7).

8. Protection system according to claim 7, wherein the capacitive voltage tap (7) comprises standardizing shields (12) for standardizing the electric field integrated in bushings (13) to which the power cables of the high voltage line of the network area (15) are connected.

9. Protection system according to claim 7, wherein the capacitive voltage tap (7) is installed in terminals (18) of the high voltage power cables.

10. Protection system according to any of claims 3 to 9, comprising at least one control / protection device (8) configured to obtain a homopolar voltage value from the line-to-neutral voltage detected by the detection device (5).

11. Protection system according to claim 10, wherein the control / protection device (8) comprises a normally closed contact configured to issue an order for the electric power generation equipment (2) to stop when the homopolar voltage value is greater than an established value indicative of the presence of a ground fault.

12. Protection system according to claim 10, comprising interconnection means (9) between the detection device (5) and the control / protection device (8).

13. Protection system according to claim 12, wherein the interconnection means (9) comprise a wiring kit configured to allow the connection of the control / protection device (8) to a capacitive signal obtained from the bushings (13) or from the terminals (18) of the high voltage power cables.

14. Protection system according to claim 12, wherein the interconnection means (9) comprise a wiring kit allowing the connection of the control / protection device (8) to a resistive signal obtained from the insulator (19) or from the terminals (18) of the high voltage power cables.

15. Protection system according to claim 3, comprising interconnection means (10) between the detection device (5) and the mentioned at least one phase (11) of the high voltage line of the network area (15).

16. Protection system according to claim 15, wherein the interconnection means (10) comprise a direct threaded connection or an articulated connection.

17. Protection system according to claim 15, wherein the interconnection means (10) comprise an overhead connection.

## Patentansprüche

1. Erdschlussschutz-System (1) für einen Netzwerkbereich (15) eines Hochspannungs-Verteilungsnetzes, wobei der Netzwerkbereich (15) umfasst:
ein erstes Hochspannungs/Niederspannungs-Stromumwandlungs-Zentrum (3), das mit wenigstens einer Phase (11) einer Hochspannungsleitung des Netzwerkbereiches (15) verbunden und so konfiguriert ist, dass es ein erstes Niederspannungs-Verteilungsnetz speist,
wenigstens ein zweites Hochspannungs/Niederspannungs-Stromumwandlungs-Zentrum (20), das mit wenigstens einer Phase (11) der Hochspannungsleitung des Netzwerkbereiches (15) verbunden und so konfiguriert ist, dass es ein zweites Niederspannungs-Verteilungsnetz speist,
eine Elektroenergie-Erzeugungsanlage (2), die so konfiguriert ist, dass sie, wenn der Netzwerkbereich (15) vom Rest des Hochspannungsnetzes isoliert ist, das erste Niederspannungs-Verteilungsnetz speist,
wobei die Elektroenergie-Erzeugungsanlage (2) mit einer Niederspannungs-Seite des ersten Zentrums (3) verbunden ist, um den Hochspannungs-Netzwerkbereich (15) über wenigstens einen Transformator (4) des ersten Zentrums (3) zu speisen, und
**dadurch gekennzeichnet, dass**
das Erdschlussschutz-System (1) ein mobiles Erdschlussschutz-System (1) ist, das, wenn der Netzwerkbereich (15) von dem Rest des Hochspannungsnetzes isoliert ist, zwischen einer Hochspannungs-Seite des ersten Zentrums (3) und einer Niederspannungs-Seite des Zentrums (3) an einer Position installiert ist, die der Energie-Erzeugungsanlage (2) vorangeht, und das Erdschlussschutz-System (1) so konfiguriert ist, dass es einen Erdschluss erfasst und eine Anweisung zum Beenden von Betrieb der Elektroenergie-Erzeugungsanlage (2) ausgibt.

2. Schutz-System nach Anspruch 1, wobei das Schutz-System (1) mit einem Erdnetz zum Schützen des ersten Stromumwandlungs-Zentrums (3) verbunden ist.

3. Schutz-System nach Anspruch 2, das wenigstens eine Erfassungsvorrichtung (5) umfasst, die so konfiguriert ist, dass sie die Phasenspannung wenigstens einer Phase (11) der Hochspannungsleitung des Netzwerkbereiches (15) erfasst.

4. Schutz-System nach Anspruch 3, wobei die Erfassungsvorrichtung (5) eine resistive Spannungsanzapfung (6) umfasst.

5. Schutz-System nach Anspruch 4, wobei die resistive Spannungsanzapfung (6) einen Präzisionswiderstand (14) sowie Metalleinsätze umfasst, die in einen aus Polymermaterial bestehenden Isolator (19) eingebettet sind, wobei die Einsätze so ausgeführt sind, dass sie als Elektroden zwischen einem aktiven Hochspannungspunkt und dem Erdnetz wirken.

6. Schutz-System nach Anspruch 4, wobei die resistive Spannungsanzapfung (6) in Anschlüssen (18) der Hochspannungs-Stromkabel installiert ist.

7. Schutz-System nach Anspruch 3, wobei die Erfassungsvorrichtung (5) eine kapazitive Spannungsanzapfung (7) umfasst.

8. Schutz-System nach Anspruch 7, wobei die kapazitive Spannungsanzapfung (7) vereinheitlichende Abschirmungen (12) zum Vereinheitlichen des elektrischen Feldes umfasst" die in Durchführungen (13) integriert sind, mit denen die Stromkabel der Hochspannungsleitung des Netzwerkbereiches (15) verbunden sind.

9. Schutz-System nach Anspruch 7, wobei die kapazitive Spannungsanzapfung (7) in Anschlüssen (18) der Hochspannungs-Stromkabel installiert ist.

10. Schutz-System nach einem der Ansprüche 3 bis 9, das wenigstens eine Steuerungs/Schutz-Vorrichtung (8) umfasst, die so konfiguriert ist, dass sie einen unipolaren Spannungswert aus der durch die Erfassungsvorrichtung (5) erfassten Phasenspannung ermittelt.

11. Schutz-System nach Anspruch 10, wobei die Steuerungs/Schutz-Vorrichtung (8) einen Ruhekontakt umfasst, der so konfiguriert ist, dass er eine Unterbrechungsanweisung für die Elektroenergie-Erzeugungsanlage (2) ausgibt, wenn der unipolare Spannungswert größer ist als ein festgelegter Wert, der das Vorhandensein eines Erdschlusses anzeigt.

12. Schutz-System nach Anspruch 10, das Verbindungseinrichtungen (9) zwischen der Erfassungsvorrichtung (5) und der Steuerungs/Schutz-Vorrichtung (8) umfasst.

13. Schutz-System nach Anspruch 12, wobei die Verbindungseinrichtungen (9) eine Verdrahtungs-Baugruppe umfassen, die so konfiguriert ist, dass sie die Verbindung der Steuerungs/Schutz-Einrichtung (8) mit einem kapazitiven Signal ermöglicht, das von den Durchführungen (13) oder von den Anschlüssen (18) der Hochspannungs-Stromkabel bezogen wird.

14. Schutz-System nach Anspruch 12, wobei die Verbindungseinrichtungen (9) eine Verdrahtungs-Baugruppe umfassen, die so konfiguriert ist, dass sie die Verbindung der Steuerungs/Schutz-Einrichtung (8) mit einem resistiven Signal ermöglicht, das von dem Isolator (19) oder von den Anschlüssen (18) der Hochspannungs-Stromkabel bezogen wird.

15. Schutz-System nach Anspruch 3, das Verbindungseinrichtungen (10) zwischen der Erfassungsvorrichtung (5) und der wenigstens einen Phase (11) der Hochspannungsleitung des Netzwerkbereiches (15) umfasst.

16. Schutz-System nach Anspruch 15, wobei die Verbindungseinrichtungen (10) eine direkte Schraubverbindung oder eine Gelenkverbindung umfassen.

17. System nach Anspruch 15, wobei die Verbindungseinrichtungen (10) eine Freileitungsverbindung umfassen.

## Revendications

1. Système de protection contre les défauts (1) pour une zone de réseau (15) d'un réseau de distribution haute tension, la zone de réseau (15) comprenant
- un premier poste de transformation électrique haute tension/basse tension (3), relié à au moins une phase (11) d'une ligne haute tension de ladite zone de réseau (15) et configuré pour alimenter un premier réseau de distribution basse tension,
- au moins un second poste de transformation électrique haute tension/basse tension (20), relié à au moins une phase (11) de la ligne haute tension mentionnée de ladite zone de réseau (15) et configuré pour alimenter un second réseau de distribution basse tension et
- un équipement de production d'énergie électrique (2) configuré pour alimenter, lorsque la zone de réseau (15) est isolée du reste du réseau haute tension, le premier réseau de distribution basse tension
dans lequel l'équipement de production d'énergie électrique (2) est relié à un côté basse tension du premier poste (3) mentionné pour alimenter la zone de réseau haute tension (15) au travers d'au moins un transformateur (4) du premier poste (3) mentionné, et **caractérisé en ce que** le système de protection contre les défauts (1) est un système de protection contre les défauts (1) portable installé entre un côté haute tension du premier poste (3) et un côté basse tension dudit poste (3) lorsque la zone de réseau (15) est isolée du reste du réseau haute tension, dans une position précédant l'équipement de production d'énergie électrique (2), le système de protection contre les défauts (1) étant configuré pour détecter un défaut de terre et pour émettre un ordre d'arrêt de fonctionnement de l'équipement de production d'énergie électrique (2).

2. Système de protection selon la revendication 1, dans lequel le système de protection (1) est relié à un réseau de terre pour protéger le premier poste de transformation électrique (3).

3. Système de protection selon la revendication 2, comprenant au moins un dispositif de détection (5) configuré pour détecter la tension entre ligne et neutre d'au moins une phase (11) de la ligne haute tension de la zone de réseau (15).

4. Système de protection selon la revendication 3, dans lequel le dispositif de détection (5) comprend une prise de tension résistive (6).

5. Système de protection selon la revendication 4, dans lequel la prise de tension résistive (6) comprend une résistance de précision (14) et des inserts métalliques intégrés dans un isolateur (19) réalisé dans un matériau polymère, les inserts étant configurés pour servir d'électrodes entre un point haute tension actif et le réseau de terre.

6. Système de protection selon la revendication 4, dans lequel la prise de tension résistive (6) est installée dans des bornes (18) des câbles électriques haute tension.

7. Système de protection selon la revendication 3, dans lequel le dispositif de détection (5) comprend une prise de tension capacitive (7).

8. Système de protection selon la revendication 7, dans lequel la prise de tension capacitive (7) comprend des blindages de normalisation (12) pour normaliser le champ électrique, intégrés dans des éléments traversants (13) auxquels sont reliés les câbles électriques de la ligne haute tension de la zone de réseau (15).

9. Système de protection selon la revendication 7, dans lequel la prise de tension capacitive (7) est installée dans des bornes (18) des câbles électriques haute tension.

10. Système de protection selon l'une quelconque des revendications 3 à 9, comprenant au moins un dispositif de commande/protection (8) configuré pour obtenir une valeur de tension homopolaire à partir de la tension entre ligne et neutre détectée par le dispositif de détection (5).

11. Système de protection selon la revendication 10, dans lequel le dispositif de commande/protection (8) comprend un contact normalement fermé configuré pour émettre un ordre d'arrêt de l'équipement de production d'énergie électrique (2) lorsque la valeur de tension homopolaire est supérieure à une valeur établie indiquant la présence d'un défaut de terre.

12. Système de protection selon la revendication 10, comprenant des moyens d'interconnexion (9) entre le dispositif de détection (5) et le dispositif de commande/protection (8).

13. Système de protection selon la revendication 12, dans lequel les moyens d'interconnexion (9) comprennent un kit de câblage configuré pour permettre la liaison du dispositif de commande/protection (8) à un signal capacitif obtenu à partir des éléments traversants (13) ou à partir des bornes (18) des câbles électriques haute tension.

14. Système de protection selon la revendication 12, dans lequel les moyens d'interconnexion (9) comprennent un kit de câblage permettant la liaison du dispositif de commande/protection (8) à un signal résistif obtenu à partir de l'isolateur (19) ou à partir des bornes (18) des câbles électriques haute tension.

15. Système de protection selon la revendication 3, comprenant des moyens d'interconnexion (10) entre le dispositif de détection (5) et l'au moins une phase (11) mentionnée de la ligne haute tension de la zone de réseau (15).

16. Système de protection selon la revendication 15, dans lequel les moyens d'interconnexion (10) comprennent une liaison filetée directe ou une liaison articulée.

17. Système de protection selon la revendication 15, dans lequel les moyens d'interconnexion (10) comprennent une liaison aérienne.
